# EUROPEAN PATENT SPECIFICATION

(11) **EP 1 502 051 B1**
(45) Date of publication and mention of the grant of the patent: **08.10.2008**
(21) Application number: 03730924.2
(22) Date of filing: 06.05.2003
(51) Int. Cl.: F16L 39/06, F16L 27/087

(54) **DEVICE FOR CONNECTING PIPEPLINES SUCH THAT RELATIVE MOTION IS ALLOWED, COMPRISING A PRETENSIONING DEVICE SUCH THAT CONSTANT SEALING GAP CAN BE PROVIDED**
VORRICHTUNG ZUR DERARTIGEN VERBINDUNG VON ROHRLEITUNGEN, DASS EINE RELATIVBEWEGUNG GESTATTET WIRD, MIT EINER VORSPANNUNGSVORRICHTUNG, SO DASS EIN GLEICHFÖRMIGER DICHTUNGSSPALT VORGESEHEN WERDEN KANN
RACCORDEMENT DE TUYAUX PERMETTANT UN DEPLACEMENT RELATIF ET COMPRENANT UN DISPOSITIF DE PRECONTRAINTE ASSURANT UN ESPACE D'ETANCHEITE

(30) Priority: 08.05.2002 NO 20022196
(43) Date of publication of application: 02.02.2005
(73) Proprietor: Advanced Production and Loading AS, 816 Kolbjørnsvik (NO)
(72) Inventor: LARSEN, Sigmund, 24116 Kiel (DE)
(74) Representative: Cronin, Brian Harold John
(86) International application number: PCT/NO2003/000146
(87) International publication number: WO 2003/095885

(56) References cited:
- EP-A1- 1 002 981
- WO-A1-00/79174
- WO-A1-99/49177

## Description

The present invention regards a device for connecting pipelines that are transporting fluid between two mutually movable units or parts. Such devices for connections are required for transfer of fluid from a subsea production site, via a riser to an offshore drilling or production vessel, whereby the requirement is that the vessel can rotate freely with respect to weather and wind, independent of the riser and the subsea installations. The ability to rotate in the connection device is particularly beneficial, in that no limitations are imposed on the vessel. Other alternatives can be the use of flexible hoses in suitable devices, for example a slip chain, but such a device causes limitation with respect to maximum rotation, typically ± 270 °.

Such devices for connection entail severe requirements as to dynamic seals that are sealing against leakage of oil or gas to the environment, as this otherwise potentially can result in damage to health, environment and values, and under all circumstances the process has to be shut down while repairs are undertaken. Such connections are often large constructions with narrow tolerances. Mistakes during assembling and harsh operational conditions for the dynamic seals, such as variations in the seal gap, can result in damage on the sealing material and loss of ability to seal.

To increase the service life for such seals and increase the safety of the process, it is crucial that the operating conditions for the dynamic seals are as beneficial and constant as possible.

Several rotating devices for connecting fluids are known, for example as apparent from patent application NO 964616. Common for the known devices are that the dynamic seals encounter variations in the gap against which they are to seal. Because of internal pressure in the connection devices during operation, the seal gap between the mutually movable rings will increase and worsen the conditions for the seals. At repeated and large variations in internal pressure, the seal gap will continuously change. This will wear out the seals over time, which will eventually result in malfunction and in worst case leakage.

Further, the prior art fluid connection devices are comprising a large number of rings, even for one bore connections, which results in expensive devices.

The objective of the present invention is to provide an improved construction where the above mentioned disadvantages in substance are avoided.

In particular the invention aims to improve a device of the type described in WO 99/49177-A1, for coupling pipelines conducting fluid under pressure, such that relative movement is allowed between two coupling parts carrying respective coupling ends of the pipelines, with a possibility for pressure testing of primary seals before operation, wherein a first of the coupling parts comprises a stationary central core provided with a longitudinal bore and a radial passage with fluid connection to the longitudinal bore, which radial passage has fluid connection with a ring formed passage formed in a second of the coupling parts that is ring formed and rotatably moveable relative to the first coupling part, the device further comprising a bearing ring that is stationary relative to the first coupling part and that is arranged axially between the second coupling part and a compensator ring, wherein axial surfaces between the first coupling part and the second coupling part and between the second coupling part and the bearing ring, respectively, comprise dynamic hydraulic primary seals and dynamic hydraulic secondary seals.

According to the invention such a device is equipped with dynamic hydraulic test seals on both axially-opposed sides of the second coupling part, is arranged for axial pretensioning of the second coupling part by means of at least one spring and comprises bores whose construction allows supply of a compensator fluid to the dynamic seals and a compensator gap arranged between the bearing ring and the compensator ring, such that a constant sealing gap can be provided with pretensioning and compensator fluid for all fluid pressures.

In the inventive arrangement a spring package, typically comprising a number of disk springs, pretensions the assembly, providing a constant pressure on the dynamic seals when the connection is not in operation. When the fluid connection device is in operation and under influence of process pressure, compensation fluid is introduced under pressure gap to balance the internal process pressure, such that the pressure on the seals remains constant, independent on whether the connection device is in operation or not. Variations in the process pressure can be handled, and the supply pressure of compensation fluid can be regulated according to the process pressure. The gap between the mutually movable rings will then remain constant and the wear on the seals be minimized. The number of seals is also minimized with respect to production feasibility and cost.

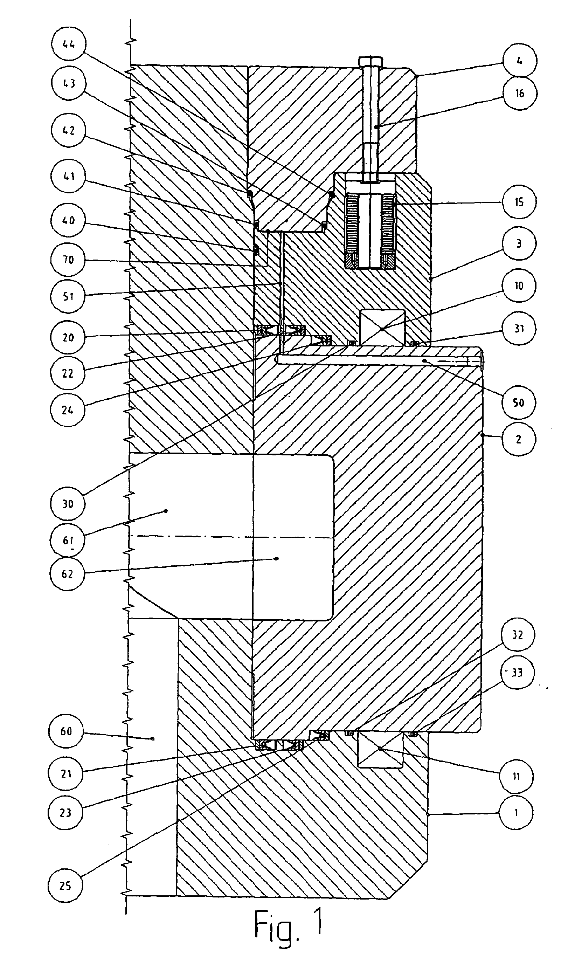

Reference is made to the drawing Figure 1, illustrating the connection device.

The fluid connection device is constructed of a core 1 having a bore 60 in the longitudinal direction, being in connection with a radial bore 61. An outlet ring 2 with a ring formed passage 62 is connected to the core 1 such that relative movements are allowed. An upper and a lower bearing 10, 11 provide a low friction bearing of the outlet ring 2.

In the core 1 a groove is provided for dynamic seals; the test seal 21, the primary seal 23 and the secondary seal 25, radially arranged between the core 1 and the outlet ring 2. Further, seals 32, 33 around bearing 11 are provided to seal against contaminations from the environment, and to maintain the lubricant in the bearing 11.

Over the outlet ring 2 is the bearing ring 3. This is stationary with respect to the core 1. The bearing ring 3 has a groove for the dynamic seals; the test seal 20, the primary seal 22 and the secondary seal 24, arranged between the outlet ring 2 and the bearing ring 3. Further, the bearing ring is provided with bores for a number of spring packages 15. The spring packages 15 are positioned axially and are pretensioned by use of an adjustment bolt 16. These provide a constant axial pressure between the bearing ring 3 and the outlet ring 2, and between the outlet ring 2 and core 1.

Similar as for the lower bearing ring 11, seals 30, 31 are provided with the bearing ring 10, one on either side.

Over the bearing ring 3 a compensator ring 4 is arranged. This is also stationary with respect to the core 1. The compensator ring 4 is provided with grooves for the adjustment bolt 16 providing pretension to the spring package 15.

In the outlet ring 2 a horizontal bore 50 having vertical connection to the radial opening between the test seal 20 and the primary seal 22 is provided. By adding liquid or gas under pressure in said opening prior to transfer of process fluid between the core 1 and the outlet ring 2, the primary seal 22 can be tested with respect to being leakproof. A similar arrangement with a bore is provided in the lower part of the outlet ring 2 for testing of the primary seal 23.

The test seal 20 (21) is situated with the "back" towards the process fluid, allowing to maintain a test pressure between the test seal 20 (21) and the primary seal 22 (23).

The bore 50 has further a vertical connection 51 to the compensator gap 70 between the bearing ring 3 and the compensator ring 4, between the seals 41 and 43. By supplying a compensator fluid under pressure to the compensator gap, to compensate for the increased internal process fluid pressure and assist the spring package, the axial gap between the outlet ring 2 and the core 1, and the axial gap between the outlet ring 2 and the bearing ring 3, can be maintained constant under operation even at large process pressure. Thereby the operating conditions of the dynamic seals 22, 23, 24, 25 are optimized.

The compensator gap between the bearing ring 3 and the compensator ring 4 has a double barrier with the sealing pairs 41, 42 and 43, 44, to avoid leakage of the compensator fluid to the environment. Further, a seal 40 between the bearing ring 3 and the core 1 is provided to avoid leakage of compensator fluid to the process fluid. The seal 40 will also hinder leakage of process fluid to the compensator gap 70.

Further, grooves are provided for static seals 43, 44 between the bearing ring 3 and the compensator ring 4, and for the static seals 41, 42 between the core 1 and the compensator ring 4. The static seals are provided to hinder process fluid to enter the environment.

## Claims

1. Device for coupling pipelines conducting fluid under pressure, such that relative movement is allowed between two coupling parts (1, 2) carrying respective coupling ends of the pipelines, with a possibility for pressure testing of primary seals before operation, wherein a first of the coupling parts (1) comprises a stationary central core provided with a longitudinal bore (60) and a radial passage (61) with fluid connection to the longitudinal bore (60), which radial passage (61) has fluid connection with a ring formed passage (62) formed in a second of the coupling parts (2) that is ring formed and rotatably moveable relative to the first coupling part (1), the device further comprising a bearing ring (3) that is stationary relative to the first coupling part (1) and that is arranged axially between the second coupling part (2) and a compensator ring (4), wherein axial surfaces between the first coupling part (1) and the second coupling part (2) and between the second coupling part (2) and the bearing ring (3), respectively, comprise dynamic hydraulic primary seals (22, 23) and dynamic hydraulic secondary seals (24, 25), **characterized in that** the device is equipped with dynamic hydraulic test seals (20, 21) on both axially-opposed sides of the second coupling part (2), is arranged for axial pretensioning of the second coupling part (2) by means of at least one spring (15) and comprises bores (50-51) whose construction allows supply of a compensator fluid to the dynamic seals (20-25) and a compensator gap (70) arranged between the bearing ring (3) and the compensator ring (4), such that a constant sealing gap can be provided with pretensioning and compensator fluid for all fluid pressures.

2. Device according to claim 1,
**characterized in that** the spring tensioning of the bearing ring (3) is provided with a number of springs (15) arranged concentrically with respect to the central core (1).

3. Device according to claim 1,
**characterized in that** the spring tensioning of the bearing ring (3) is provided with one single spring of larger diameter that the central core (1).

4. Device according to claim 1 or 2,
**characterized in that** the springs comprise a number of disk springs.

5. Device according to claim 1,
**characterized in that** the compensator fluid is supplied either from an external source or from process fluid under pressure.

6. Device according to any one of the above-mentionned claims, **characterized in that** the pretensioning is adjustable.

## Patentansprüche

1. Vorrichtung zum Verbinden von unter Druck stehendem Fluid führenden Rohrleitungen derart, dass zwischen zwei jeweils Verbindungsenden der Rohrleitungen aufnehmenden Verbindungsteilen (1, 2) eine Relativbewegung ermöglicht ist, mit einer Möglichkeit zum Druckprüfen von Hauptdichtungen vor einer Inbetriebnahme, wobei ein erstes der Verbindungsteile (1) über einen feststehenden Zentralkern verfügt, der mit einer Längsbohrung (60) und mit einem Radialdurchlass (61) mit einer Fluidverbindung zu der Längsbohrung (60) ausgebildet ist, wobei der Radialdurchlass (61) eine Fluidverbindung mit einem ringartig ausgebildeten Durchlass (62) hat, der in einem zweiten der Verbindungsteile (2) ausgebildet ist, das ringartig ausgestaltet und in Bezug auf das erste Verbindungsteil (1) drehbar beweglich ist, wobei die Vorrichtung weiterhin über einen Lagerring (3) verfügt, der in Bezug auf das erste Verbindungsteil (1) stationär und der axial zwischen dem zweiten Verbindungsteil (2) und einem Ausgleichsring (4) angeordnet ist, wobei Axialflächen zwischen dem ersten Verbindungsteil (1) sowie dem zweiten Verbindungsteil (2) und zwischen dem zweiten Verbindungsteil (2) sowie dem Lagerring (3) jeweils über dynamische hydraulische Hauptdichtungen (22, 23) und über dynamische hydraulische Zusatzdichtungen (24, 25) verfügen, **dadurch gekennzeichnet, dass** die Vorrichtung an beiden axial einander gegenüberliegenden Seiten des zweiten Verbindungsteiles (2) mit dynamischen hydraulischen Testdichtungen (20, 21) ausgestattet ist, dass sie mittels wenigstens einer Feder (15) zum axialen Vorspannen des zweiten Verbindungsteiles (2) eingerichtet ist und dass sie Bohrungen (50-51) umfasst, deren Konstruktion es gestattet, den dynamischen Dichtungen (20-25) ein Ausgleichsfluid zuzuführen, sowie mit einem Ausgleichsspalt (70) ausgebildet ist, der zwischen dem Lagerring (3) und dem Ausgleichsring (4) angeordnet ist, so dass ein gleichbleibender Ausgleichsspalt mit Vorspannung und Ausgleichsfluid für alle Fluiddrücke bereitgestellt werden können.

2. Vorrichtung nach Anspruch 1, **dadurch gekennzeichnet, dass** das Federspannen des Lagerringes (3) mit einer Anzahl von Federn (15) erfolgt, die in Bezug auf den Zentralkern (1) konzentrisch angeordnet sind.

3. Vorrichtung nach Anspruch 1, **dadurch gekennzeichnet, dass** das Federspannen des Lagerringes (3) mit einer einzigen Feder mit einem größeren Durchmesser als der des Zentralkernes (1) erfolgt.

4. Vorrichtung nach Anspruch 1 oder 2, **dadurch gekennzeichnet, dass** die Federn eine Anzahl von Tellerfedern umfassen.

5. Vorrichtung nach Anspruch 1, **dadurch gekennzeichnet, dass** das Ausgleichsfluid entweder von einer äußeren Quelle oder von einem unter Druck stehenden Prozessfluid bereitgestellt ist.

6. Vorrichtung nach einem der vorangehenden Ansprüche, **dadurch gekennzeichnet, dass** die Vorspannung einstellbar ist.

## Revendications

1. Dispositif pour raccorder des pipe-lines conduisant un fluide sous pression, de telle façon que le mouvement relatif soit permis entre deux pièces de raccord (1,2 ) portant des extrémités de raccord respectives des pipe-lines, avec une possibilité d'essai de pression de joints d'étanchéité principaux avant le fonctionnement, dans lequel une première des pièces de raccord (1) comprend une partie centrale immobile pourvue d'un alésage longitudinal (60) et d'un passage radial (61) avec une liaison fluidique vers l'alésage longitudinal (60), lequel passage radial (61) a une liaison fluidique avec un passage de forme annulaire (62) réalisé dans une seconde des pièces de raccord (2) qui est de forme annulaire et peut se déplacer de manière rotative par rapport à la première pièce de raccord (1), le dispositif comprenant de plus une bague de palier (3) qui est immobile par rapport à la première pièce de raccord (1) et qui est agencée axialement entre la seconde pièce de raccord (2) et une bague de compensation (4), dans lequel des surfaces axiales entre la première pièce de raccord (1) et la seconde pièce de raccord (2) et entre la seconde pièce de raccord (2) et la bague de palier (3), respectivement, comprennent des joints d'étanchéité principaux dynamiques, hydrauliques (22,23) et des joints d'étanchéité secondaires dynamiques, hydrauliques (24,25),
**caractérisé en ce que** le dispositif est équipé de joints d'étanchéité d'essai dynamiques, hydrauliques (20,21) des deux côtés opposés axialement de la seconde pièce de raccord (2), est agencé pour précontraindre axialement la seconde pièce de raccord (2) par l'intermédiaire d'au moins un ressort (15) et comprend des alésages (50-51) dont la construction permet l'amenée d'un fluide de compensation vers les joints d'étanchéité dynamiques (20-25) et un espace de compensation (70) agencé entre la bague de palier (3) et la bague de compensation (4), de telle sorte qu'un espace d'étanchéité constant puisse être prévu avec précontrainte et fluide de compensation pour toutes les pressions fluidiques.

2. Dispositif selon la revendication 1,
**caractérisé en ce que** la mise en contrainte élastique de la bague de palier (3) est prévue avec une pluralité de ressorts (15) agencés de manière concentrique par rapport à la partie centrale (1).

3. Dispositif selon la revendication 1,
**caractérisé en ce que** la mise en contrainte élastique de la bague de palier (3) est prévue avec un ressort unique de plus grand diamètre que la partie centrale (1).

4. Dispositif selon la revendication 1 ou 2,
**caractérisé en ce que** les ressorts comprennent un certain nombre de rondelles élastiques.

5. Dispositif selon la revendication 1,
**caractérisé en ce que** le fluide de compensation est fourni soit à partir d'une source externe ou à partir d'un fluide de traitement sous pression.

6. Dispositif selon une quelconque des revendications mentionnées ci-dessus,
**caractérisé en ce que** la mise en précontrainte est réglable.
